# EUROPEAN PATENT APPLICATION

(11) **EP 3 553 030 A1**
(43) Date of publication of application: **16.10.2019**
(21) Application number: 19171813.9
(22) Date of filing: 18.05.2015
(51) Int. Cl.: C02F 1/00, B01D 35/16, C11D 1/14, C11D 3/28, C11D 11/00

(54) **ONLINE CLEANING DEVICE AND ONLINE CLEANING METHOD FOR SHIP BALLAST WATER TREATMENT FILTER**

(62) Divisional of application: 15892143.7
(71) Applicant: Sunrui Marine Environment Engineering Co., Ltd., Qingdao, Shandong 266101 (CN)
(72) Inventor: DUAN, Dongxia, Qingdao, Shandong 266101 (CN); Guangzhou, LIU, Qingdao, Shandong 266101 (CN)
(74) Representative: Haseltine Lake Kempner LLP

(57) **Abstract**

The present invention discloses an online cleaning device and an online cleaning method. The online cleaning device comprises a filter cleaning pipeline and a cleaning liquid preparation tank located in the filter cleaning pipeline. The cleaning liquid preparation tank is provided with a cleaning liquid outlet and a cleaning liquid reinjection opening. The filter cleaning pipeline comprises a cleaning liquid injection pipeline located between the cleaning liquid outlet of the cleaning liquid preparation tank and a water inlet of the filter, and a cleaning liquid reinjection pipeline located between a water outlet of the filter and a cleaning liquid reinjection opening of the cleaning liquid preparation tank. The cleaning liquid prepared in the cleaning liquid preparation tank is injected into the filter through the cleaning liquid injection pipeline and is re-injected into the cleaning liquid preparation tank through the cleaning liquid reinjection pipeline. The present invention can remove dirt in the filter completely. The filter capacity of the filter after regeneration is recovered well.

## Description

### TECHNICAL FIELD

The present invention relates to ballast water treatment technology for ship, and more particularly to cleaning liquid for ship ballast water treatment filter, online cleaning device and online cleaning method for ship ballast water treatment filter.

### BACKGROUND

During the voyage of a ship, ballasting water is necessary. When ballasting, local aquatic organisms are brought into the ballast tank and then discharged to the destination waterway with the ballast water. The ballast water, carried by the ship from one place to another, causes the spread of harmful aquatic organisms and pathogens. In order to effectively control and prevent the spread of harmful aquatic organisms and pathogens, which were caused by the ballast water of ships, International Marine Organization (IMO) passed the "International Convention for the Control and Management of Ships' Ballast Water and Sediments" in 2004. "The Convention" requires all ships to be equipped with ballast water treatment system on schedule and is applicable retroactively to all present ships.

Ship ballast water treatment equipment is a kind of ship supporting equipment which is required by the international maritime organization. It is mainly used to kill ballast water. Filtration technology is a common treatment technology used in ship ballast water management system. It is mainly used to filter biological or suspended particles which are larger than 50um in ballast water, so as to facilitate subsequent treatment.

The existing filter for ship ballast water treatment is mostly made of stainless steel wire, and the case of the filter is made of carbon steel coated with epoxy anticorrosive coating. The meshes of the filter are fine and the diameter of the meshes is only tens of microns. It is easy to block the meshes during use. After a period of time, the filtration capacity of the filter decreases, the backwash frequency increases, and the backwash effect decreases. After disassembling the equipment, it is found that the filter mesh is blocked by sand, dirt and so on, and the surface of the filter is corroded in different degrees. In order to ensure the filtration capacity of the filter, the filter must be cleaned and regenerated. At present, our country lacks the cleaning technology for ship ballast water treatment filter.

### SUMMARY

Accordingly, the present invention provides a cleaning liquid for ship ballast water treatment filter, online cleaning device and online cleaning method for ship ballast water treatment filter.

The cleaning liquid for ship ballast water treatment filter provided by the present invention, comprises hydrochloric acid with a molar concentration of 3.2-6.4mol/L, hexamethylene tetramine with a quality-to-volume ratio of 1.3-4.0g/L, polyacrylic acid with a quality-to-volume ratio of 13.0-33.5g/L, polyaspartic acid with a quality-to-volume ratio of 3.0-13.5g/L, sodium dodecyl sulfate with a quality-to-volume ratio of 0.6-2.0g/L, and sodium gluconate with a quality-to-volume ratio of 3.0-10.0g/L.

The online cleaning device for ship ballast water treatment filter provided by the present invention, comprises a filter cleaning pipeline and a cleaning liquid preparation tank disposed on the filter cleaning pipeline. The cleaning liquid preparation tank comprises a cleaning liquid outlet and a cleaning liquid reinjection opening. The filter cleaning pipeline comprises a cleaning liquid injection pipeline arranged between the cleaning liquid outlet of the cleaning liquid preparation tank and a water inlet of the filter, and a cleaning liquid reinjection pipeline arranged between a water outlet of the filter and cleaning liquid reinjection opening of the cleaning liquid preparation tank. The cleaning liquid prepared in the cleaning liquid preparation tank is injected into the filter via the cleaning liquid injection pipeline and re-injected into the cleaning liquid preparation tank via the cleaning liquid reinjection pipeline.

The online cleaning method for ship ballast water treatment filter provided by the present invention, includes the following steps: adding a filter cleaning pipeline and a cleaning liquid preparation tank in the ballast water main pipeline of the ship ballast water treatment system, the filter cleaning pipeline comprising a cleaning liquid injection pipeline and a cleaning liquid reinjection pipeline, the cleaning liquid injection pipeline being located between the cleaning liquid outlet of the cleaning liquid preparation tank and a water inlet of the filter, and the cleaning liquid reinjection pipeline being located between a water outlet of the filter and a cleaning liquid reinjection opening of the cleaning liquid preparation tank; injecting cleaning liquid prepared in the cleaning liquid preparation tank into the filter through the cleaning liquid injection pipeline; soaking for a predetermined period of time; re-injecting the cleaning liquid back to the cleaning liquid preparation tank through the cleaning liquid reinjection pipeline.

Techniques provided in embodiments of the present invention have the following advantages:

The present invention adds the filter cleaning pipeline and the cleaning liquid preparation tank in existing ballast water main pipeline. Through the filter cleaning pipeline, the cleaning liquid prepared in the cleaning liquid preparation tank is injected into the filter and re-injected back to the cleaning liquid preparation tank after soaking for a predetermined period of time, so as to realize online cleaning filter without disassembling the filter. The cleaning method has a high cleaning efficiency and the dirt on the filter can be completely removed. The filter capacity of the filter after regeneration is recovered well.

The aforementioned description is a conceptual overview of the present invention. In order to make the technique of the present invention be clearly understood and enable in accordance with specification, and the above or other aspects, features and advantages of the present invention become apparent, embodiments and detailed descriptions in conjunction with the accompanying drawings are provided hereafter.

### BRIEF DESCRIPTION OF THE DRAWINGS

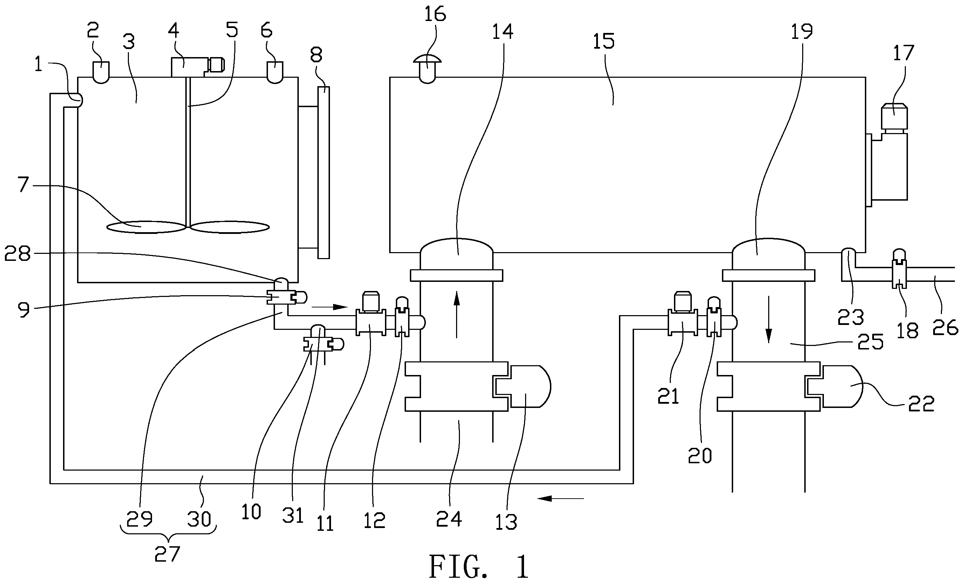

FIG. 1 schematically shows an online cleaning device for a ship ballast water treatment filter of the present invention.

### DETAILED DESCRIPTION OF PREFERRED EMBODIMENTS

In order to further illustrate the techniques and effect of the present invention adopted for achieving the aspects, exemplary embodiments, structure, features and the effects of the cleaning liquid and online cleaning device and method for ship ballast water treatment filters according to the present invention will be described thoroughly in conjunction with the accompanying drawings and the preferred embodiments.

The foregoing or other techniques, features and effects of the present invention will become apparent in the following detailed descriptions of the preferred embodiments in conjunction with the accompanying drawings. In view of descriptions of exemplary embodiments, the techniques and effects of the present invention adopted for achieving aspects will be further and specifically understood. The accompanying drawings are merely used for illustration and description, but not used to limit the present invention.

An online cleaning device for ship ballast water treatment filter provided by the present invention is mainly used for online cleaning filters used in ship ballast water treatment devices. As shown in Figure 1, a filter 15 is located in the ballast water main pipeline of the ship ballast water treatment device. The top of the filter 15 has a gas water separating valve 16, the bottom has a filter water inlet 14, a filter water outlet 19 and a filter sewage outfall 23. The filter water inlet 14 is connected with a filter water inlet pipe 24, the filter water outlet 19 is connected with a filter water outlet pipe 25, and the filter sewage outfall 23 is connected with a filter sewage outfall pipe 26. The filter water inlet pipe 24 and the filter water outlet pipe 25 are parts of ballast water main pipeline. The filter water inlet pipe 24, the filter outlet pipe 25 and the filter sewage outfall pipe 26 are respectively provided with a filter inlet valve 13, a filter outlet valve 22 and a filter drain valve 18 at positions close to the filter 15. The filter 15 is provided with an electric motor 17 at a position near the filter drain valve 18 for backwashing of the filter 15.

The online cleaning device of the filter provided by the present invention comprises a filter cleaning pipeline 27 and a cleaning liquid preparation tank 3 arranged in the filter cleaning pipeline 27.

Wherein, the cleaning liquid preparation tank 3 is used for preparing filter cleaning liquid. The top of the cleaning liquid preparation tank 3 is provided with a fresh water inlet 2 and a drug adding opening 6, the bottom of the cleaning liquid preparation tank 3 is provided with a cleaning liquid outlet 28, and the upper side corner is provided with a cleaning liquid reinjection opening 1. Moreover, one side of the cleaning liquid preparation tank 3 is provided with a liquid level gauge 8 configured for monitoring and controlling the liquid level in the cleaning liquid preparation tank 3. In addition, the top of the cleaning liquid preparation tank 3 is further equipped with a stirring electric motor 4, and a stirring shaft 5 and stirring blades 7 connecting with the stirring electric motor 4, the stirring shaft 5 and the stirring blades 7 extending into the cleaning liquid preparation tank 3 in order to stir the liquid in the tank 3 in the process of preparation of the cleaning liquid so that the added drugs can be mixed evenly quickly.

The cleaning liquid prepared in the cleaning liquid preparation tank 3 comprises hydrochloric acid, hexamethylene tetramine, polyacrylic acid, polyaspartic acid, sodium dodecyl sulfate and sodium gluconate. The cleaning liquid can react with dirt on the mesh of the filter without damaging the mesh. In preparing the cleaning liquid, the added drugs are solid except that hydrochloric acid is liquid. In preparing the cleaning liquid, the added drugs dissolve into a certain amount of fresh water which is then stirred evenly, and the required cleaning liquid can be obtained. Specifically, in the cleaning liquid of this embodiment, the molar concentration of hydrochloric acid is 3.2-6.4mol/L, the quality-to-volume ratio of the hexamethylene tetramine is 1.3-4.0g/L, the quality-to-volume ratio of polyacrylic acid is 13.0-33.5g/L, the quality-to-volume ratio of the polyaspartic acid is 3.0-13.5g/L, the quality-to-volume ratio of sodium dodecyl sulfate is 0.6-2.0g/L, and the quality-to-volume ratio of sodium gluconate is 3.0-10.0g/L.

The filter cleaning pipeline 27 comprises a cleaning liquid injection pipeline 29 arranged between the cleaning liquid outlet 28 of the cleaning liquid preparation tank 3 and the filter water inlet 14, and a cleaning liquid reinjection pipeline 30 arranged between the filter water outlet 19 and the cleaning liquid reinjection opening 1 of the cleaning liquid preparation tank 3. Two ends of the cleaning liquid injection pipeline 29 are respectively connected with the cleaning liquid outlet 28 of the cleaning liquid preparation tank 3 and the filter water inlet pipe 24, and the connection between the cleaning liquid injection pipe 29 and the filter water inlet pipe 24 is located at downstream of the filter water inlet valve 13. Two ends of the cleaning liquid reinjection pipeline 30 are respectively connected with the filter water outlet pipe 25 and the cleaning liquid rejection opening 1 of the cleaning liquid preparation tank 3, and the connection between the cleaning liquid reinjection pipeline 30 and the filter water outlet pipe 25 is located at the upstream of the water outlet valve 22. It should be noted that the upstream and downstream are relative to the direction of water flow in the filter water inlet pipe 24 and the filter water outlet pipe 25. The cleaning liquid prepared in the cleaning liquid preparation tank 3 can be injected into the filter 15 through the cleaning liquid injection pipeline 29, and can be re-injected back into the cleaning liquid preparation tank 3 by the cleaning liquid reinjection pipeline 30.

In addition, the cleaning liquid injection pipeline 29 is provided with a valve 12 at a location near the filter water inlet pipe 24, and a valve 9 at a location close to the cleaning liquid preparation tank 3. A water pump 11 is arranged between the valve 9 and the valve 12, a backwash water injection pipe 31 is arranged between the valve 9 and the water pump 11, and the backwash water injection pipe 31 is provided with a backwash water injection valve 10. A valve 20 and a water pump 21 are provided at positions of the cleaning liquid reinjection pipeline 30 near the filter water outlet pipe 25. The valve 9, valve 12 and water pump 11 are opened in the process of injecting the cleaning liquid into the filter 15, so that the cleaning liquid is injected into the filter 15 under the driving of the water pump 11. The valve 20 and the water pump 21 are opened in the process of the cleaning liquid being re-injected into the cleaning liquid preparation tank 3, so that the cleaning liquid is re-injected back to the cleaning liquid preparation tank 3 under the action of the water pump 21. The backwash water injection valve 10, valve 12 and water pump 11 are opened after the cleaning liquid is re-injected back to the cleaning liquid injection preparation tank 3. After the backwash water injection valve 10 is opened, backwash fresh water is injected into the filter 15 through the backwashing water injection valve 10 and the valve 12 under the action of the water pump 11 to backwash the filter 15 in order to further flush the dirt off the mesh of the filter 15.

Below further describes an online cleaning method for cleaning a ship ballast water treatment filter using the online cleaning device of the filter of the present invention. The method comprises at least the following steps:
Step S1: preparing the cleaning liquid. Fresh water is added to the cleaning liquid preparation tank 3 through the fresh water inlet 2 until the stirring blades 7 are submerged. The stirring electric motor 4 is started up. According to the formula of the cleaning liquid, the weighed hydrochloric acid is slowly added to the cleaning liquid preparation tank 3 through the drug adding opening 6. After being mixed evenly, fresh water is added to the cleaning liquid preparation tank 3 through the fresh water inlet 2 to the preset volume, followed by adding in turns the weighed hexamethylene tetramine, polyacrylic acid, polyaspartic acid, sodium dodecyl sulfonat, and sodium gluconatee which dissolve fully and mix evenly.
Step S2: turning on the filter drain valve 18 and draining the filter 15 as empty as possible.
Step S3: turning off the filter inlet valve 13, filter outlet valve 22 and the filter drain valve 18. Opening the valves 9 and 12 in the cleaning liquid injection valve pipeline 29 and turning on the water pump 11, so that the cleaning liquid is injected into the filter 15 through the cleaning liquid injection pipeline 29. When the filter 15 is full, the water pump 11 is turned off and the valve 9 is closed.
Step S4: soaking for 5-10 minutes so that a full reaction happens between the cleaning liquid and the dirt inside the filter 15.
Step S5: opening the valve 20 in the cleaning fluid reinjection pipeline 30 and starting the water pump 21 so that the cleaning liquid in the filter 15 flows back into the cleaning liquid preparation tank 3 through the cleaning liquid reinjection pipeline 30 so as to be reused.
Step S6: turning on the backwash water injection valve 10 and the water pump 11 to allow backwash fresh water to be injected into the filter 15 through the backwash water injection valve 10 and valve 12 and backwashing for 1-2 minutes.
Step S7: if the filter 15 is blocked seriously, repeating steps S2-S5 to enhance cleaning effect.

In summary, the present invention has at least the following beneficial effects:
(1) the formula of the cleaning liquid adopted by the present invention being simple and easy to be prepared.
(2) through adding the filter cleaning pipeline and the cleaning liquid preparation tank in existing ballast water main pipeline, online cleaning with high efficiency, low cost and good effect being realized without the need for disassembling the filter.
(3) the cleaning process of the present invention having little damage to the filter, and having no damage and corrosion to the coating of the filter mesh and the filter case.
(4) the cleaning method of the present invention being simple and easy to implement.

Specific embodiments are shown below to verify the beneficial effects of the present invention.

### Embodiment 1:

In the prepared cleaning liquid, the molar concentration of hydrochloric acid is 6.0mol/L, the quality-to-volume ratio of the hexamethylene tetramine is 2.5g/L, the quality-to-volume ratio of polyacrylic acid is 16.0g/L, the quality-to-volume ratio of the polyaspartic acid is 8.5g/L, the quality-to-volume ratio of sodium dodecyl sulfate is 0.8g/L, and the quality-to-volume ratio of sodium gluconate is 6.5g/L. Specifically, when preparing the cleaning liquid, fresh water is added to the cleaning liquid preparation tank 3 through the fresh water inlet 2 until the stirring blades 7 are submerged. The volume of the water is about 100L. The stirring electric motor 4 is started. Through the drug adding opening 6, the weighed HCl (molar concentration=12mol/L) 125L is slowly and evenly added into the cleaning liquid preparation tank 3. After all the hydrochloric acid has been added, fresh water is slowly added into the cleaning liquid preparation tank 3 through the fresh water inlet 2 to cause the total volume of the liquid to be 250L. After stirring the liquid evenly, 625g hexamethylene tetramine, 4000g polyacrylic acid, 2125g polyaspartic acid, 200g sodium dodecyl sulfate, and 1625g sodium gluconate are added into the cleaning liquid preparation tank 3 in turns and the liquid is stirred to cause the drugs to dissolve fully and be mixed evenly.

Before cleaning the filter 15, the filter drain valve 18 is turned on to drain the filter 15 as empty as possible.

Closing the filter inlet valve 13, the water outlet valve 22 and the filter drain valve 18, opening the valves 9 and 12 of the cleaning liquid injection pipeline 29, and turning on the water pump 11 so that the cleaning liquid is injected into the filter 15 through the cleaning liquid injection pipeline 29. When the filter 15 is full, turning off the water pump 11 and closing the valve 9.

### Soaking for 10 minutes.

Opening the valve 20 in the cleaning liquid reinjection pipeline 30 and starting up the water pump 21 so that the cleaning liquid in the filter 15 is re-injected into the cleaning liquid preparation tank 3 through the cleaning liquid reinjection pipeline 30 so as to be reused.

Opening the backwash water injection valve 10 and starting the water pump 11 to cause backwash fresh water to be injected into the filter 15 through the backwashing water injection valve 10 and valve 12 and backwash the filter 15 for one minute.

With this method, a 40um filter of a ship ballast water management system which is used for half year, is cleaned. Before cleaning, the pressure of the inlet and outlet of the filter is 0.8 bar. After cleaning, ongoing a press test, the pressure of the filter water inlet 14 and the filter water outlet 19 is less than 0.1 bar. Regeneration of the filter 15 is good.

The cleaned mesh viewed microscopically is bright and free of corrosion. The surface of the case is well coated without bubbling or breakage.

### Embodiment two:

In the prepared cleaning liquid, the molar concentration of hydrochloric acid is 4.0mol/L, the quality-to-volume ratio of the hexamethylene tetramine is 2.0g/L, the quality-to-volume ratio of polyacrylic acid is 20.0g/L, the quality-to-volume ratio of the polyaspartic acid is 10.0g/L, the quality-to-volume ratio of sodium dodecyl sulfate is 1.0g/L, and the quality-to-volume ratio of sodium gluconate is 5.0g/L. Specifically, when preparing the cleaning liquid, fresh water is added to the cleaning liquid preparation tank 3 through the fresh water inlet 2 until the stirring blades 7 are submerged. The volume of the water is about 150L. The stirring electric motor 4 is started. Through the drug adding opening 6, the weighed HCl (molar concentration=12mol/L) 100L is added into the cleaning liquid preparation tank 3. After all the hydrochloric acid has been added, fresh water is slowly added into the cleaning liquid preparation tank 3 through the fresh water inlet 2 to cause the total volume of the liquid to be 300L. After stirring evenly, 600g hexamethylene tetramine, 6000g polyacrylic acid, 3000g polyaspartic acid, 300g sodium dodecyl sulfate, and 1500g sodium gluconate are added into the cleaning liquid preparation tank 3 in turns and the liquid is stirred to cause the drug to dissolve fully and be mixed evenly.

Before cleaning the filter 15, the filter drain valve 18 is turned on to drain the filter 15 as empty as possible.

Closing the filter inlet valve 13, the water outlet valve 22 and the filter drain valve 18, opening the valves 9 and 12 in the cleaning liquid injection pipeline 29, and turning on the water pump 11 so that the cleaning liquid is injected into the filter 15 through the cleaning liquid injection pipeline 29. When the filter 15 is full, turning off the water pump 11 and closing the valve 9.

### Soaking for 5 minutes.

Opening the valve 20 of the cleaning liquid reinjection pipeline 30 and starting up the water pump 21 so that the cleaning liquid in the filter 15 is re-injected into the cleaning liquid preparation tank 3 through the cleaning liquid reinjection pipeline 30 so as to be reused.

Opening the backwash water injection valve 10 and starting the water pump 11 to cause backwash fresh water to be injected into the filter 15 through the backwashing water injection valve 10 and valve 12 and backwash the filter 15 for two minutes.

With this method, a 50um filter of a ship ballast water management system which is used for half year, is cleaned. Before cleaning, the pressure of the inlet and outlet of the filter is 0.7 bar. After cleaning, ongoing a press test, the pressure of the filter water inlet 14 and the filter water outlet 19 is less than 0.1 bar. Regeneration of the filter 15 is good.

### Embodiment three:

In the prepared cleaning liquid, the molar concentration of hydrochloric acid is 5.0mol/L, the quality-to-volume ratio of the hexamethylene tetramine is 1.5g/L, the quality-to-volume ratio of polyacrylic acid is 15.0g/L, the quality-to-volume ratio of the polyaspartic acid is 5.0g/L, the quality-to-volume ratio of sodium dodecyl sulfate is 1.2g/L, and the quality-to-volume ratio of sodium gluconate is 4.0g/L. Specifically, when preparing the cleaning liquid, fresh water is added to the cleaning liquid preparation tank 3 through the fresh water inlet 2 until the stirring blades 7 are submerged. The volume of the water is about 100L. The stirring electric motor 4 is started. Through the drug adding opening 6, the weighed HCl (molar concentration=12mol/L) 125L is added into the cleaning liquid preparation tank 3. After all the hydrochloric acid has been added, fresh water is slowly added into the cleaning liquid preparation tank 3 through the fresh water inlet 2 to cause the total volume of the liquid to be 300L. After stirring evenly, 450g hexamethylene tetramine, 4500g polyacrylic acid, 1500g polyaspartic acid, 360g sodium dodecyl sulfate, and 1200g sodium gluconate are added into the cleaning liquid preparation tank 3 in turns and the liquid is stirred to cause the drug to dissolve fully and be mixed evenly.

Before cleaning the filter 15, the filter drain valve 18 is turned on to drain the filter 15 as empty as possible.

Closing the filter inlet valve 13, the water outlet valve 22 and the filter drain valve 18, opening the valves 9 and 12 of the cleaning liquid injection pipeline 29, and turning on the water pump 11 so that the cleaning liquid is injected into the filter 15 through the cleaning liquid injection pipeline 29. When the filter 15 is full, turning off the water pump 11 and closing the valve 9.

### Soaking for 7 minutes.

Opening the valve 20 of the cleaning liquid reinjection pipeline 30 and starting up the water pump 21 so that the cleaning liquid in the filter 15 is re-injected into the cleaning liquid preparation tank 3 through the cleaning liquid reinjection pipeline 30 so as to be reused.

Opening the backwash water injection valve 10 and starting the water pump 11 to cause backwash fresh water to be injected into the filter 15 through the backwashing water injection valve 10 and valve 12 and backwash the filter 15 for one minute.

With this method, a 40um filter of a ship ballast water management system which is used for one year, is cleaned. Before cleaning, the pressure of the inlet and outlet of the filter is 0.8 bar. After cleaning, ongoing a press test, the pressure of the filter water inlet 14 and the filter water outlet 19 is less than 0.1 bar. Regeneration of the filter 15 is good.

The above is just the embodiment of the invention, not any restrictions on the form of the invention, although the invention has been to example above, but not to limit the invention, familiar with any technical personnel in the field, in the technical scheme of the invention can be used when the range these reveal the technical content to make a change or modified to change the equivalent examples, but not out of the technical scheme of the invention, according to any simple modification, equivalent change and modification technology of the essence of the invention for the above examples, are still belongs to the technical scheme of the invention.

### Industrial Applicability

The present invention adds the filter cleaning pipeline and the cleaning liquid preparation tank in existing ballast water main pipeline. Through the filter cleaning pipeline, the cleaning liquid prepared in the cleaning liquid preparation tank is injected into the filter and re-injected back to the cleaning liquid preparation tank after soaking for a predetermined period of time, so as to realize online cleaning the filter without disassembling the filter. The online cleaning has a high cleaning efficiency, low cost and good effect. The cleaning process has little damage to the filter and no damage and corrosion to the coating of the filter mesh and the filter case. The cleaning method is simple and easy to implement. Moreover, the formulation of the cleaning liquid of the present invention is simple and easy to be prepared.

The present disclosure is also defined in and by the following numbered paragraphs:
1. A cleaning liquid for cleaning a ship ballast water treatment filter, wherein the cleaning liquid comprises hydrochloric acid with a molar concentration of 3.2-6.4mol/L, hexamethylene tetramine with a quality-to-volume ratio of 1.3-4.0g/L, polyacrylic acid with a quality-to-volume ratio of 13.0-33.5g/L, polyaspartic acid with a quality-to-volume ratio of 3.0-13.5g/L, sodium dodecyl sulfate with a quality-to-volume ratio of 0.6-2.0g/L, and sodium gluconate with a quality-to-volume ratio of 3.0-10.0g/L.
2. The cleaning liquid for cleaning a ship ballast water treatment filter of paragraph 1, wherein in the prepared cleaning liquid, the molar concentration of the hydrochloric acid is 6.0mol/L, the quality-to-volume ratio of the hexamethylene tetramine is 2.5g/L, the quality-to-volume ratio of the polyacrylic acid is 16.0g/L, the quality-to-volume ratio of the polyaspartic acid is 8.5g/L, the quality-to-volume ratio of the sodium dodecyl sulfate is 0.8g/L, and the quality-to-volume ratio of the sodium gluconate is 6.5g/L.
3. The cleaning liquid for cleaning a ship ballast water treatment filter of paragraph 1, wherein in the prepared cleaning liquid, the molar concentration of the hydrochloric acid is 4.0mol/L, the quality-to-volume ratio of the hexamethylene tetramine is 2.0g/L, the quality-to-volume ratio of the polyacrylic acid is 20.0g/L, the quality-to-volume ratio of the polyaspartic acid is 10.0g/L, the quality-to-volume ratio of the sodium dodecyl sulfate is 1.0g/L, and the quality-to-volume ratio of the sodium gluconate is 5.0g/L.
4. The cleaning liquid for cleaning a ship ballast water treatment filter of paragraph **1**, wherein in the prepared cleaning liquid, the molar concentration of the hydrochloric acid is 5.0mol/L, the quality-to-volume ratio of the hexamethylene tetramine is 1.5g/L, the quality-to-volume ratio of the polyacrylic acid is 15.0g/L, the quality-to-volume ratio of the polyaspartic acid is 5.0g/L, the quality-to-volume ratio of the sodium dodecyl sulfate is 1.2g/L, and the quality-to-volume ratio of the sodium gluconate is 4.0g/L.
5. A online cleaning device for a ship ballast water treatment filter, wherein the online cleaning device comprises a filter cleaning pipeline (27) and a cleaning liquid preparation tank (3) disposed in filter cleaning pipeline (27), the cleaning liquid preparation tank (3) comprising a cleaning liquid outlet (28) and a cleaning liquid reinjection opening (1), the filter cleaning pipeline (27) comprising a cleaning liquid injection pipeline (29) arranged between cleaning liquid outlet (28) of the cleaning liquid preparation tank (3) and a filter water inlet (14), and a cleaning liquid reinjection pipeline (30) arranged between the filter water outlet (19) and the cleaning liquid reinjection opening (1) of the cleaning liquid preparation tank (3), the cleaning liquid prepared in the cleaning liquid preparation tank (3) being injected into the filter (15) via the cleaning liquid injection pipeline (29) and re-injected into the cleaning liquid preparation tank (3) via the cleaning liquid reinjection pipeline (30).
6. The online cleaning device for a ship ballast water treatment filter of paragraph 5, wherein the cleaning liquid prepared in the cleaning liquid preparation tank (3) comprises hydrochloric acid with a molar concentration of 3.2-6.4mol/L, hexamethylene tetramine with a quality-to-volume ratio of 1.3-4.0g/L, polyacrylic acid with a quality-to-volume ratio of 13.0-33.5g/L, polyaspartic acid with a quality-to-volume ratio of 3.0-13.5g/L, sodium dodecyl sulfate with a quality-to-volume ratio of 0.6-2.0g/L, and sodium gluconate with a quality-to-volume ratio of 3.0-10.0g/L.
7. The online cleaning device for a ship ballast water treatment filter of paragraph 5, wherein the filter (15) is located in the ballast water main pipeline of the ship ballast water treatment device, the filter water inlet (14) is connected with a filter water inlet pipe (24), the filter water outlet (19) is connected with a filter water outlet pipe (25), two ends of the cleaning liquid injection pipeline (29) are respectively connected with the cleaning liquid outlet (28) of the cleaning liquid preparation tank (3) and the filter water inlet pipe (24), and two ends of the cleaning liquid reinjection pipeline (30) are respectively connected with the filter water outlet pipe (25) and the cleaning liquid reinjection opening (1) of the cleaning liquid preparation tank (3).
8. The online cleaning device for a ship ballast water treatment filter of paragraph 7, wherein the filter water inlet pipe (24) is provided with a filter water inlet valve (13), the connection between the cleaning liquid injection pipe (29) and the filter water inlet pipe (24) is located at downstream of the filter water inlet valve (13), the cleaning liquid injection pipeline (29) is provided with a valve (12) at a position near the filter water inlet pipe (24), the valve (12) is open in the process of the cleaning liquid being injected into the filter (15), the filter water inlet valve (13) is close in the process of online cleaning the filter (15); the filter water outlet pipe (25) is provided with a filter water outlet valve (22), a connection between the cleaning liquid reinjection pipeline (30) and the filter water outlet pipe (25) is located at upstream of the filter water outlet valve (22), the cleaning liquid reinjection pipeline (30) is provided with a valve (20) at a position close to the filter water outlet pipe (25), the filter water outlet valve (22) is close in the process of online cleaning the filter (15), and the valve (20) is open in the process of the cleaning liquid is re-injected into the cleaning liquid preparation tank (3).
9. The online cleaning device for a ship ballast water treatment filter of paragraph 8, wherein the cleaning liquid injection pipe (29) is provided with a valve (9) at a position close to the cleaning liquid preparation tank (3), a water pump (11) is arranged between the valve (9) and the valve (12), a backwash water injection pipe (31) is arranged between the valve (9) and the water pump (11), the backwash water injection pipe (31) is provided with a backwash water injection valve (10), the valve (9) is open in the process of the cleaning liquid being injected into the filter (15) and is close after the cleaning liquid is injected into the filter (15), the backwash water injection valve (10) is close in the process of the cleaning liquid being injected into the filter (15) and open after the cleaning liquid is re-injected into the cleaning liquid preparation tank (3), the backwash fresh water is injected into the filter (15) through the backwash water injection valve (10) after the backwash water injection valve (10) is open, the water pump (11) is started during the process of the cleaning liquid is injected into the filter (15) and the process of the backwash fresh water is injected into the filter (15).
10. The online cleaning device for a ship ballast water treatment filter of paragraph 8, wherein the cleaning liquid reinjection pipeline (30) is provided with a water pump (21) which is open during the process of the cleaning liquid is re-injected into the cleaning liquid preparation tank (3) and close during the process of the cleaning liquid is injected into the filter (15).
11. The online cleaning device for a ship ballast water treatment filter of paragraph 5, wherein the cleaning liquid preparation tank (3) is provided with a stirring electric motor (4) and a stirring shaft (5) and stirring blades (7) connected with the electric motor (4), the electric motor (4) driving the stirring blades (7) to stir liquid in the cleaning liquid preparation tank (3) during the process of preparing the cleaning liquid.
12. A online cleaning method for cleaning a ship ballast water treatment filter, wherein the online cleaning method comprising:
   adding a filter cleaning pipeline (27) and a cleaning liquid preparation tank (3) in the ballast water main pipeline of the ship ballast water treatment system, the filter cleaning pipeline (27) comprising a cleaning liquid injection pipeline (29) and a cleaning liquid reinjection pipeline (30), the cleaning liquid injection pipeline (29) being located between the cleaning liquid outlet (28) of the cleaning liquid preparation tank (3) and a filter water inlet (14), the cleaning liquid reinjection pipeline (30) being located between the filter water outlet (19) and a cleaning liquid reinjection opening (1) of the cleaning liquid preparation tank (3);
   injecting cleaning liquid prepared in the cleaning liquid preparation tank (3) into the filter (15) through the cleaning liquid injection pipeline (29);
   soaking for a predetermined period of time ;
   re-injecting the cleaning liquid back to the cleaning liquid preparation tank (3) through the cleaning liquid reinjection pipeline (30).
13. The online cleaning method for cleaning a ship ballast water treatment filter of paragraph 12, wherein the filter water inlet (14) is connected with a filter water inlet pipe (24), the filter water outlet (19) is connected with a filter water outlet pipe (25), the filter sewage outfall (23) is connected with a filter sewage outfall pipe (26), the filter water inlet pipe (24), the filter outlet pipe (25) and the filter sewage outfall pipe (26) are respectively provided with a filter inlet valve (13), a filter outlet valve (22) and a filter drain valve (18), two ends of the cleaning liquid injection pipeline (29 are respectively connected with the cleaning liquid outlet (28) of the cleaning liquid preparation tank (3) and the filter water inlet pipe (24), and the connection between the cleaning liquid injection pipe (29) and the filter water inlet pipe (24) is located at downstream of the filter water inlet valve (13), two ends of the cleaning liquid reinjection pipeline (30) are respectively connected with the filter water outlet pipe (25) and the cleaning liquid rejection opening (1) of the cleaning liquid preparation tank (3), and the connection between the cleaning liquid reinjection pipeline (30) and the filter water outlet pipe (25) is located at upstream of the water outlet valve (22), the cleaning liquid injection pipeline (29) is provided with a valve (9) and a water pump (11), the cleaning liquid reinjection pipeline (30) is provided with a valve (20 and a water pump (21), before the step of injecting the cleaning liquid into the filter (15) the online cleaning method further comprising:
   opening the filter drain valve (18) to drain the filter (15);
   closing the filter inlet valve (13), the filter outlet valve (22) and filter drain valve (18) and turning on the valve (19) and the water pump (11);
   after the step of injecting the cleaning liquid into the filter (15) the online cleaning method further comprising:
      turning off the valve (9) and the water pump (11);
      after the step of soaking the online cleaning method further comprising:
         turning on the valve (20 and the water pump (21).
14. The online cleaning method for cleaning a ship ballast water treatment filter of paragraph 13, wherein the cleaning liquid injection pipeline (29) is provided with a valve (12) between the valve (9) and the filter inlet pipe (24), a backwash water injection pipe (31) is arranged between the valve (9) and the water pump (11), and the backwash water injection pipe (31) is provided with a backwash water injection valve (10), the online cleaning method further comprising opening the valve (12) at the time of opening the valve (9) and starting the water pump (11);
   after the step of re-injecting the cleaning liquid into the cleaning liquid preparation tank the online cleaning method further comprising:
   turning on backwash water injection valve (10) and the water pump (11);
   backwashing filter (15) for a predetermined period of time.
15. The online cleaning method for cleaning a ship ballast water treatment filter of paragraph 12, wherein the cleaning liquid prepared in the cleaning liquid preparation tank (3) comprises hydrochloric acid with a molar concentration of 3.2-6.4mol/L, hexamethylene tetramine with a quality-to-volume ratio of 1.3-4.0g/L, polyacrylic acid with a quality-to-volume ratio of 13.0-33.5g/L, polyaspartic acid with a quality-to-volume ratio of 3.0-13.5g/L, sodium dodecyl sulfate with a quality-to-volume ratio of 0.6-2.0g/L, and sodium gluconate with a quality-to-volume ratio of 3.0-10.0g/L.

## Claims

1. A online cleaning device for a ship ballast water treatment filter, wherein the online cleaning device comprises a filter cleaning pipeline (27) and a cleaning liquid preparation tank (3) disposed in filter cleaning pipeline (27), the cleaning liquid preparation tank (3) comprising a cleaning liquid outlet (28) and a cleaning liquid reinjection opening (1), the filter cleaning pipeline (27) comprising a cleaning liquid injection pipeline (29) arranged between cleaning liquid outlet (28) of the cleaning liquid preparation tank (3) and a filter water inlet (14), and a cleaning liquid reinjection pipeline (30) arranged between the filter water outlet (19) and the cleaning liquid reinjection opening (1) of the cleaning liquid preparation tank (3), the cleaning liquid prepared in the cleaning liquid preparation tank (3) being injected into the filter (15) via the cleaning liquid injection pipeline (29) and re-injected into the cleaning liquid preparation tank (3) via the cleaning liquid reinjection pipeline (30).

2. The online cleaning device for a ship ballast water treatment filter of claim **1**, wherein the cleaning liquid prepared in the cleaning liquid preparation tank (3) comprises hydrochloric acid with a molar concentration of 3.2-6.4mol/L, hexamethylene tetramine with a mass-to-volume ratio of 1.3-4.0g/L, polyacrylic acid with a mass-to-volume ratio of 13.0-33.5g/L, polyaspartic acid with a mass-to-volume ratio of 3.0-13.5g/L, sodium dodecyl sulfate with a mass-to-volume ratio of 0.6-2.0g/L, and sodium gluconate with a mass-to-volume ratio of 3.0-10.0g/L.

3. The online cleaning device for a ship ballast water treatment filter of claim **1**, wherein the filter (15) is located in the ballast water main pipeline of the ship ballast water treatment device, the filter water inlet (14) is connected with a filter water inlet pipe (24), the filter water outlet (19) is connected with a filter water outlet pipe (25), two ends of the cleaning liquid injection pipeline (29) are respectively connected with the cleaning liquid outlet (28) of the cleaning liquid preparation tank (3) and the filter water inlet pipe (24), and two ends of the cleaning liquid reinjection pipeline (30) are respectively connected with the filter water outlet pipe (25) and the cleaning liquid reinjection opening (1) of the cleaning liquid preparation tank (3).

4. The online cleaning device for a ship ballast water treatment filter of claim **3**, wherein the filter water inlet pipe (24) is provided with a filter water inlet valve (13), the connection between the cleaning liquid injection pipe (29) and the filter water inlet pipe (24) is located at downstream of the filter water inlet valve (13), the cleaning liquid injection pipeline (29) is provided with a valve (12) at a position near the filter water inlet pipe (24), the valve (12) is open in the process of the cleaning liquid being injected into the filter (15), the filter water inlet valve (13) is close in the process of online cleaning the filter (15); the filter water outlet pipe (25) is provided with a filter water outlet valve (22), a connection between the cleaning liquid reinjection pipeline (30) and the filter water outlet pipe (25) is located at upstream of the filter water outlet valve (22), the cleaning liquid reinjection pipeline (30) is provided with a valve (20) at a position close to the filter water outlet pipe (25), the filter water outlet valve (22) is close in the process of online cleaning the filter (15), and the valve (20) is open in the process of the cleaning liquid is re-injected into the cleaning liquid preparation tank (3).

5. The online cleaning device for a ship ballast water treatment filter of claim **4**, wherein the cleaning liquid injection pipe (29) is provided with a valve (9) at a position close to the cleaning liquid preparation tank (3), a water pump (11) is arranged between the valve (9) and the valve (12), a backwash water injection pipe (31) is arranged between the valve (9) and the water pump (11), the backwash water injection pipe (31) is provided with a backwash water injection valve (10), the valve (9) is open in the process of the cleaning liquid being injected into the filter (15) and is close after the cleaning liquid is injected into the filter (15), the backwash water injection valve (10) is close in the process of the cleaning liquid being injected into the filter (15) and open after the cleaning liquid is re-injected into the cleaning liquid preparation tank (3), the backwash fresh water is injected into the filter (15) through the backwash water injection valve (10) after the backwash water injection valve (10) is open, the water pump (11) is started during the process of the cleaning liquid is injected into the filter (15) and the process of the backwash fresh water is injected into the filter (15).

6. The online cleaning device for a ship ballast water treatment filter of claim **4**, wherein the cleaning liquid reinjection pipeline (30) is provided with a water pump (21) which is open during the process of the cleaning liquid is re-injected into the cleaning liquid preparation tank (3) and close during the process of the cleaning liquid is injected into the filter (15).

7. The online cleaning device for a ship ballast water treatment filter of claim **1**, wherein the cleaning liquid preparation tank (3) is provided with a stirring electric motor (4) and a stirring shaft (5) and stirring blades (7) connected with the electric motor (4), the electric motor (4) driving the stirring blades (7) to stir liquid in the cleaning liquid preparation tank (3) during the process of preparing the cleaning liquid.

8. A online cleaning method for cleaning a ship ballast water treatment filter, wherein the online cleaning method comprising:
adding a filter cleaning pipeline (27) and a cleaning liquid preparation tank (3) in the ballast water main pipeline of the ship ballast water treatment system, the filter cleaning pipeline (27) comprising a cleaning liquid injection pipeline (29) and a cleaning liquid reinjection pipeline (30), the cleaning liquid injection pipeline (29) being located between the cleaning liquid outlet (28) of the cleaning liquid preparation tank (3) and a filter water inlet (14), the cleaning liquid reinjection pipeline (30) being located between the filter water outlet (19) and a cleaning liquid reinjection opening (1) of the cleaning liquid preparation tank (3);
injecting cleaning liquid prepared in the cleaning liquid preparation tank (3) into the filter (15) through the cleaning liquid injection pipeline (29);
soaking for a predetermined period of time ;
re-injecting the cleaning liquid back to the cleaning liquid preparation tank (3) through the cleaning liquid reinjection pipeline (30).

9. The online cleaning method for cleaning a ship ballast water treatment filter of claim 8, wherein the filter water inlet (14) is connected with a filter water inlet pipe (24), the filter water outlet (19) is connected with a filter water outlet pipe (25), the filter sewage outfall (23) is connected with a filter sewage outfall pipe (26), the filter water inlet pipe (24), the filter outlet pipe (25) and the filter sewage outfall pipe (26) are respectively provided with a filter inlet valve (13), a filter outlet valve (22) and a filter drain valve (18), two ends of the cleaning liquid injection pipeline (29 are respectively connected with the cleaning liquid outlet (28) of the cleaning liquid preparation tank (3) and the filter water inlet pipe (24), and the connection between the cleaning liquid injection pipe (29) and the filter water inlet pipe (24) is located at downstream of the filter water inlet valve (13), two ends of the cleaning liquid reinjection pipeline (30) are respectively connected with the filter water outlet pipe (25) and the cleaning liquid rejection opening (1) of the cleaning liquid preparation tank (3), and the connection between the cleaning liquid reinjection pipeline (30) and the filter water outlet pipe (25) is located at upstream of the water outlet valve (22), the cleaning liquid injection pipeline (29) is provided with a valve (9) and a water pump (11), the cleaning liquid reinjection pipeline (30) is provided with a valve (20 and a water pump (21), before the step of injecting the cleaning liquid into the filter (15) the online cleaning method further comprising:
opening the filter drain valve (18) to drain the filter (15);
closing the filter inlet valve (13), the filter outlet valve (22) and filter drain valve (18) and turning on the valve (19) and the water pump (11);
after the step of injecting the cleaning liquid into the filter (15) the online cleaning method further comprising:
turning off the valve (9) and the water pump (11);
after the step of soaking the online cleaning method further comprising:
turning on the valve (20 and the water pump (21).

10. The online cleaning method for cleaning a ship ballast water treatment filter of claim **9**, wherein the cleaning liquid injection pipeline (29) is provided with a valve (12) between the valve (9) and the filter inlet pipe (24), a backwash water injection pipe (31) is arranged between the valve (9) and the water pump (11), and the backwash water injection pipe (31) is provided with a backwash water injection valve (10), the online cleaning method further comprising opening the valve (12) at the time of opening the valve (9) and starting the water pump (11);
after the step of re-injecting the cleaning liquid into the cleaning liquid preparation tank the online cleaning method further comprising:
turning on backwash water injection valve (10) and the water pump (11);
backwashing filter (15) for a predetermined period of time.

11. The online cleaning method for cleaning a ship ballast water treatment filter of claim **8**, wherein the cleaning liquid prepared in the cleaning liquid preparation tank (3) comprises hydrochloric acid with a molar concentration of 3.2-6.4mol/L, hexamethylene tetramine with a mass-to-volume ratio of 1.3-4.0g/L, polyacrylic acid with a mass-to-volume ratio of 13.0-33.5g/L, polyaspartic acid with a mass-to-volume ratio of 3.0-13.5g/L, sodium dodecyl sulfate with a mass-to-volume ratio of 0.6-2.0g/L, and sodium gluconate with a mass-to-volume ratio of 3.0-10.0g/L.
